# EUROPEAN PATENT APPLICATION

(11) **EP 1 587 287 A2**
(43) Date of publication of application: **19.10.2005**
(21) Application number: 05007624.9
(22) Date of filing: 07.04.2005
(51) Int. Cl.: H04M 1/725, H04M 1/57

(54) **Method and apparatus for performing bringup simulation in a mobile terminal**

(30) Priority: 14.04.2004 KR 2004025718
(71) Applicant: SAMSUNG ELECTRONICS CO., LTD., Suwon-si, Gyeonggi-do (KR)
(72) Inventor: Kim, Hun-Kee, Yeongtong-gu Suwon-si Gyeonggi-do (KR); Choi, Kyu-Hyun, Yeongtong-gu Suwon-si Gyeonggi-do (KR); Kim, Joo-Kwang, Yeongtong-gu Suwon-si Gyeonggi-do (KR); Ryu, Joon-Sang, Yeongtong-gu Suwon-si Gyeonggi-do (KR); Shin, Kyo-Sook, Yeongtong-gu Suwon-si Gyeonggi-do (KR)
(74) Representative: Lang, Johannes

(57) **Abstract**

An apparatus and method for providing a bring-up simulation game in a mobile terminal that makes a call over a mobile communication network are provided. In the apparatus, a call detector monitors an incoming or outgoing call and collects bring-up call information from the monitored call. A call decider analyzes bring-up call information associated with a phone number mapped to a predetermined character among the collected bring-up call information, numerically quantizes the analyzed bring-up call information, and determines the growth stage of the character according to the numerical bring-up call information. A character controller updates the appearance and state of the character according to the growth stage of the character. A display displays the updated appearance and state of the character.

## Description

### BACKGROUND OF THE INVENTION

### Field of the Invention:

The present invention relates generally to an additional service available from a mobile terminal. In particular, the present invention relates to an apparatus and method for performing a bring-up simulation to bring up or develop a character.

### Description of the Related Art:

Besides their basic call functionality, mobile terminals have recently been developed to provide a variety of additional services including multimedia functionality and games. Mobile terminals having the ability of providing reinforced multimedia service include camera phones, MPEG Audio Layer-3 (MP3) phones, and Bluetooth-equipped phones.

These mobile terminals have an advantage over Personal Computers (PCs) due to their portability. Compared to the PCs, the mobile terminals provide easy connectivity to the other party irrespective of time and place and provide additional functions, such as an electronic note and a phone book.

Mobile gaming is conspicuous as an additional service. At the present developmental stage of mobile gaming, lower-level block games, such as those at the level of Tetris® are available due to the size and/or capacity limitations of hardware components such as a Central Processing Unit (CPU), a memory, and a display.

Mobile games are now at an initial developmental stage in the evolution of computer games.

Games that can be played on a PC or any other electronic device include block (classic), arcade, adventure, strategy simulation, bring-up simulation (e.g., rearing or nurturing simulation), role playing, and action when they are classified according to genre. They are also categorized into Multi-User Dungeon (MUD) and single user dungeon according to the type of playing. A MUD game is played by a plurality of gamers through connections to a network, and a single user dungeon game is played by one gamer. Among those various games, the bring-up simulation is suitable for mobile terminals which are advantageously portable.

Accordingly, a need exists for techniques of providing a bring-up simulation game for a mobile terminal as it is played on a PC or a game device in order to satisfy user demands and maximize the advantage of the mobile terminal.

### SUMMARY OF THE INVENTION

An object of the present invention is to substantially solve at least the above problems and/or disadvantages and to provide at least the advantages below. Accordingly, an object of the present invention is to provide a method and apparatus for providing a bring-up simulation game in a mobile terminal.

Another object of the present invention is to provide a method and apparatus for providing a bring-up simulation game in a mobile terminal in an interactive manner that combines active management from the user of the mobile terminal with passive management from another person.

A further object of the present invention is to provide a method and apparatus for providing a bring-up simulation game in a mobile terminal such that a character is brought up according to the degree of affection and closeness from a particular person measured from the call traffic volume between the user of the mobile terminal and the particular person.

Still another object of the present invention is to provide a method and apparatus for enabling a character to actively express itself in relation to its growth according to active management information associated with calls at a phone number mapped to the character.

Yet another object of the present invention is to provide a method and apparatus for managing personal connections with persons listed in a phone book using call information mapped to characters.

The above objects are achieved by providing an apparatus and method for providing a bring-up simulation game in a mobile terminal that makes a call over a mobile communication network are provided.

According to one aspect of the present invention, in an apparatus for providing a bring-up simulation game in a mobile terminal that makes a call over a mobile communication network, a call detector monitors an incoming or outgoing call and collects bring-up call information from the monitored call. A call decider analyzes bring-up call information associated with a phone number mapped to a predetermined character among the collected bring-up call information, numerically quantizes the analyzed bring-up call information, and determines the growth stage of the character according to the numerical bring-up call information. A character controller updates the appearance and state of the character according to the growth stage of the character. A display displays the updated appearance and state of the character.

According to another aspect of the present invention, in a method of providing a bring-up simulation game in a mobile terminal, an intended initial character to be brought up in the bring-up simulation game is generated and mapped to a phone number of a predetermined person. Bring-up call information associated with the phone number is detected, upon input of the phone number. The appearance and state of the character are updated by analyzing the bring-up call information.

### BRIEF DESCRIPTION OF THE DRAWINGS

The above and other objects, features and advantages of the present invention will become more apparent from the following detailed description when taken in conjunction with the accompanying drawings in which:
FIG. 1 is a flowchart illustrating a whole operation for providing a bring-up simulation game according to an embodiment of the present invention;
FIG. 2 is a block diagram of a mobile terminal having a bring-up simulator according to an embodiment of the present invention;
FIG. 3 illustrates a character generator for generating a character in the bring-up simulation game according to an embodiment of the present invention;
FIG. 4A illustrates a user's character generation data collection using a camera phone according to an embodiment of the present invention;
FIG. 4B illustrates a user's character generation data collection through a mobile communication network according to an embodiment of the present invention;
FIG. 4C illustrates a user's character generation data collection from a database in a server of the mobile communication network according to an embodiment of the present invention;
FIG. 5A illustrates character growing by a bring-up simulation in the mobile terminal according to an embodiment of the present invention;
FIG. 5B illustrates a liquid crystal display (LCD) screen set for the bring-up simulation in the mobile terminal according to another embodiment of the present invention;
FIG. 6 is a block diagram of a bring-up simulator according to an embodiment of the present invention;
FIG. 7 is a flowchart illustrating the operation of a call detector according to an embodiment of the present invention;
FIG. 8 is a flowchart illustrating the operation of a character controller according to bring-up call information according to an embodiment of the present invention;
FIG. 9 is a flowchart illustrating an operation for simulating actions of a character based on active management information according to an embodiment of the present invention; and
FIG. 10 is a flowchart illustrating an operation for managing a personal connection with a person having a phone number to which the character is mapped according to an embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail for the sake of conciseness.

The present invention provides a bring-up simulation game on a mobile terminal. A desired game character is set and grows up according to bring-up call information.

The bring-up simulation game is played to bring up a predetermined character on an electronic device such as a computer. The character (e.g., a pet such as a dog) is taken care of in software.

A character is a creature with life having its own personality and traits, represented as an image or a picture. Its name, personality, and actions reflect a certain character. Particularly in embodiments of the present invention, a character is created based on various character generation data including, but not limited to, a caricature of a certain person, a cartoon, a picture, or an animal. Bring-up call information used to bring up the character is information about calls at a predetermined phone number to which the character is mapped.

In a one-to-N (N is a natural number) correspondence, as well as a one-to-one correspondence, the phone number mapped to the character can be matched to a person or persons using the phone number. Thus, a group of persons can be represented by one character. For example, a character is created to represent a group of family members, friends, or colleagues, to thereby manage the group. Also, a plurality of phone numbers can be registered for a person in relation to one character. The phone numbers preferably include any associated contact numbers including a mobile phone number, a home phone number, and an office phone number.

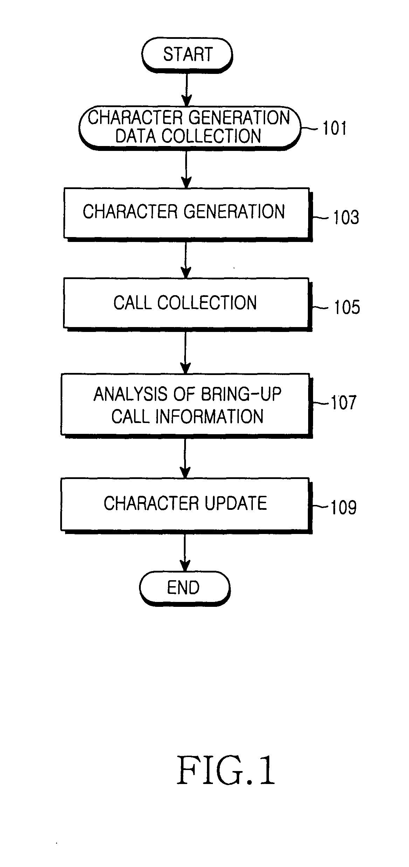

With reference to FIG. 1, a method of performing a bring-up simulation according to an embodiment of the present invention will be described below.

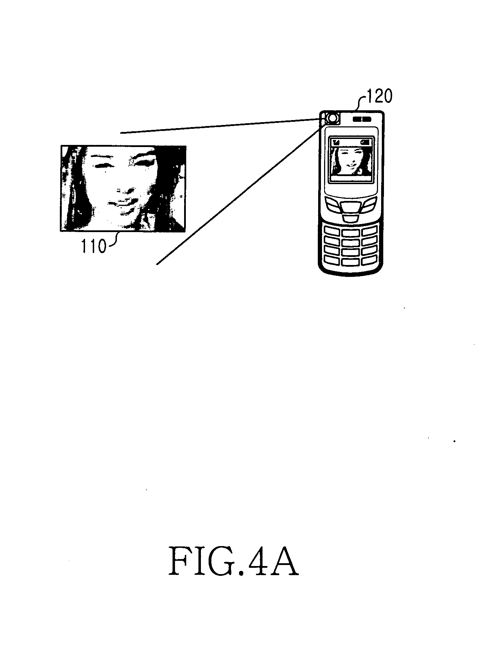

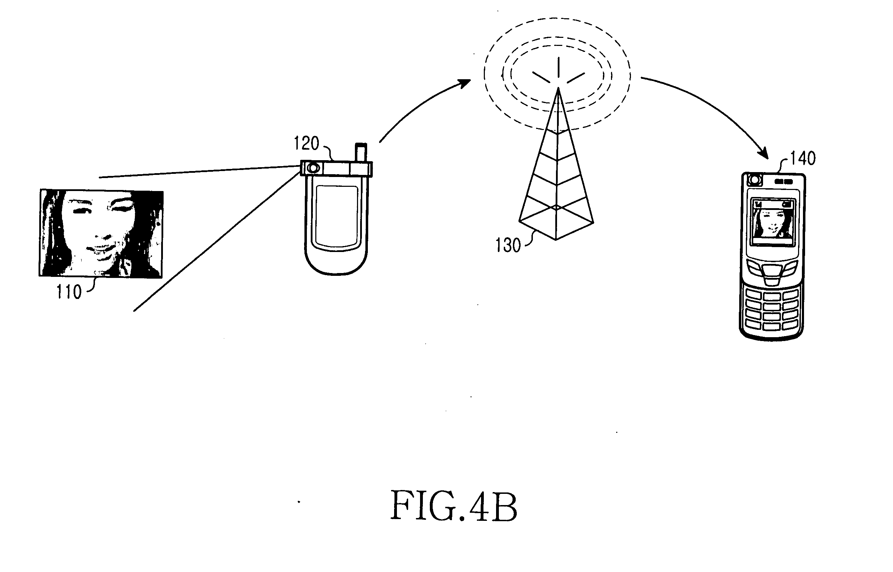

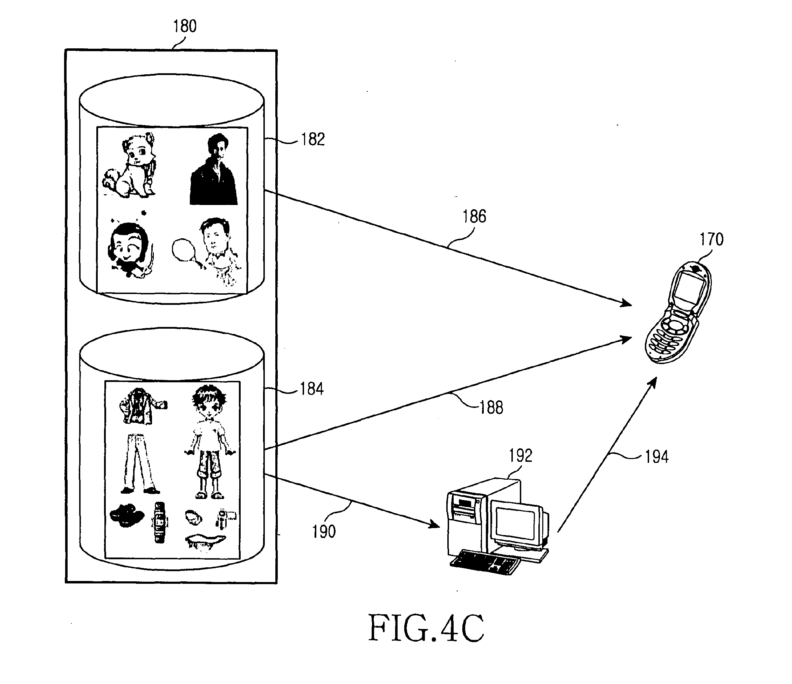

FIG. 1 is a flowchart illustrating an operation for providing a bring-up simulation game according to an embodiment of the present invention. Referring to FIG. 1, a mobile terminal collects character generation data by which to create a character in step 101. The character generation data preferably includes a picture or image file of a predetermined object, which will be described later in greater detail with reference to FIGs. 4A, 4B and 4C.

In step 103, the mobile terminal generates a character to be raised by simulation using the character generation data and maps the character to the phone number of a predetermined person like a family member, a girl/boy friend, or a friend.

The mobile terminal collects calls in step 105. The calls preferably comprise incoming/outgoing voice calls, received/transmitted text messages, and product messages, pictures, and multimedia files for music or decoration of the character.

In step 107, the mobile terminal extracts bring-up call information associated with the phone number mapped to the character from the calls and analyzes the bring-up call information. The bring-up call information preferably comprises information about the number and duration of the incoming and the outgoing calls to the phone number, the number of incoming and outgoing text messages, and product messages for decorating the character.

In step 109, the mobile terminal updates the character based on the bring-up call information and displays the updated character on its LCD screen. The updates can be character growth, character stasis, or character retrogression.

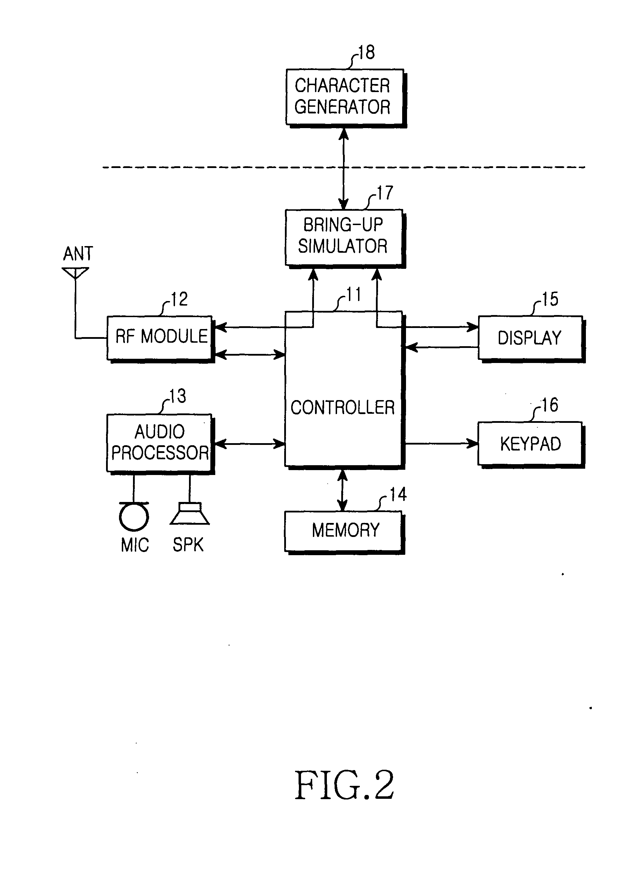

FIG. 2 is a block diagram of a mobile terminal having a bring-up simulator according to an embodiment of the present invention.

With reference to FIG. 2, a description will be made of the configuration and operation of components in the mobile terminal to which an embodiment of the present invention is applied.

The mobile terminal is comprised of a controller 11, a radio frequency (RF) module 12, an audio processor 13, a memory 14, a display 15, a keypad 16, a bring-up simulator 17, and a character generator 18.

The controller 11 provides an overall control to the mobile terminal, especially to the bring-up simulator 17 according to an embodiment of the present invention.

The RF module 12 downconverts an RF signal received through an antenna (ANT) and provides the downconverted signal to the controller 11 or the audio processor 13 according to the type of the received data. The RF module 12 provides the controller 11 with data from a traffic channel, or a paging/control signal of a control channel, and provides the audio processor 13 with voice data received when a voice call is set up, or sound effects related to character updates received from the bring-up simulator 17. The sound effects are preferably voice or beep sounds.

The audio processor 13 is typically configured to have a vocoder and operated under the control of the controller 11. The audio processor 13 decodes coded voice data received from the RF module 12 to an electrical voice signal and outputs the voice signal to a speaker (SPK). The speaker then converts the electrical voice signal into audible sounds. The audio processor 13 also encodes an electrical voice signal received from a microphone (MIC) and outputs the coded voice data to the RF module 12.

The memory 14 can be configured to have a Read Only Memory (ROM) and a Random Access Memory (RAM). The memory 14 is divided into an area for storing data needed for the control operation of the controller 11, an area for storing data by a user, and an area for temporarily storing data generated during the control operation of the controller 11. That is, the memory 14 is a randomly accessible, readable and writable memory.

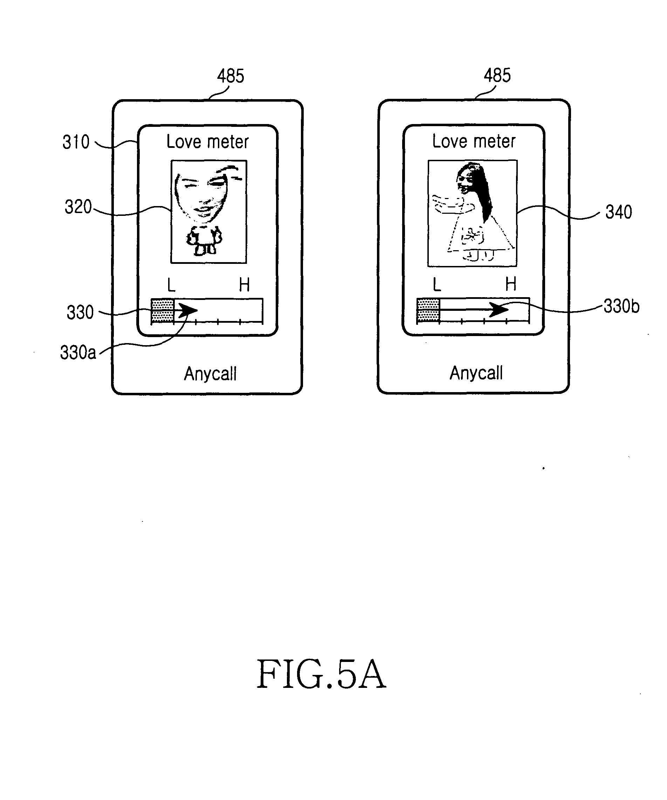

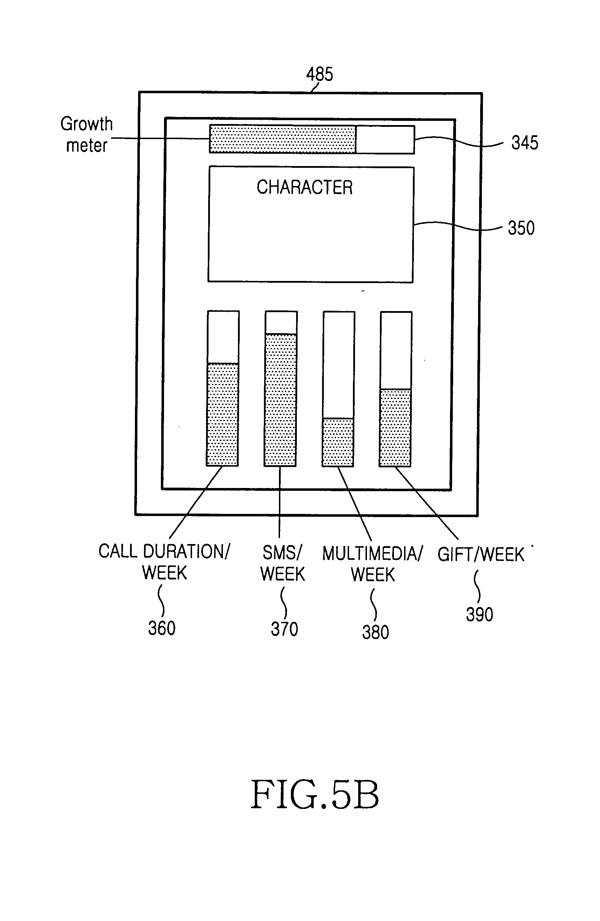

The display 15 is comprised of a device for displaying an operational state in characters or in an icon such as an LCD, a vibration motor, and an alarm lamp. The LCD preferably displays the growth and state of the character, icons used for manual management, and a menu associated with active management information for the character, which will be described later in more detail with reference to FIG. 5.

The keypad 16 is configured in a typical key matrix structure. It comprises alphanumerical keys and function keys for invoking functions. The keypad 16 further includes directional keys for scrolling up, down, left and right, and an OK key by which to provide key data corresponding to a key pressed by the user to the controller 11.

The bring-up simulator 17 extracts bring-up call information associated with the phone number mapped to the character from call information received from the RF module 12, brings up the character based on the bring-up call information, extracts personal connection management information, and manages the phone number based on the personal connection management information. Also, the bring-up simulator 17 collects active management information about the character and transmits to the display 15 an active menu for character growing and the grown appearances and current state of the character to the display 15.

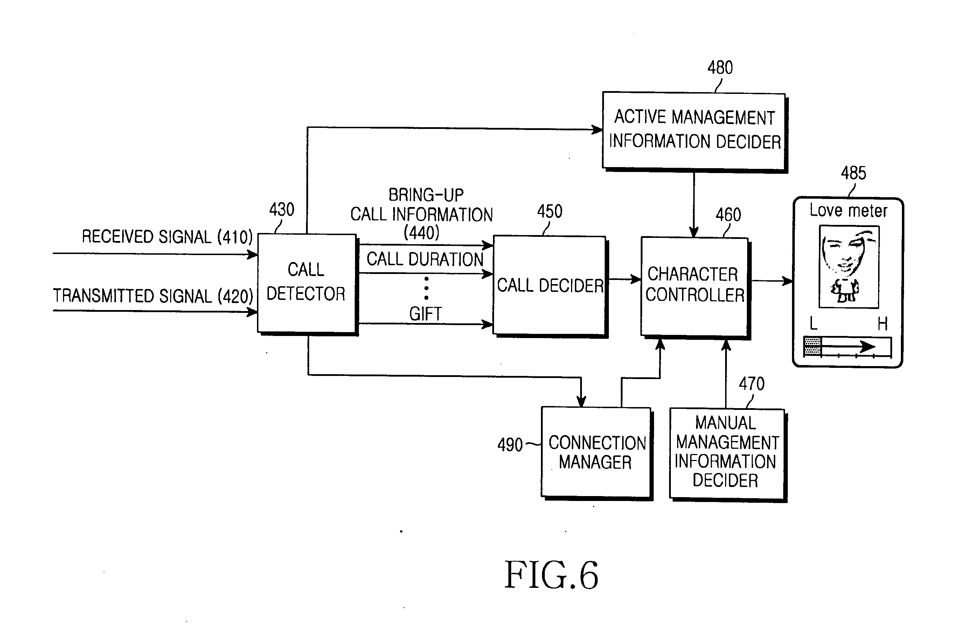

There may exist as many characters as objects of interest for the bring-up simulator 17, rather than a single character, and one or more characters can be generated in many ways. The function of the bring-up simulator 17 will be described in more detail with reference to FIG. 6.

The character generator 18 creates the character to be brought up in the bring-up simulator 17 using character generation data received from the RF module 12 or stored in the memory 14. The character generator 18 is provided in the mobile terminal, or separately in a mobile communication network.

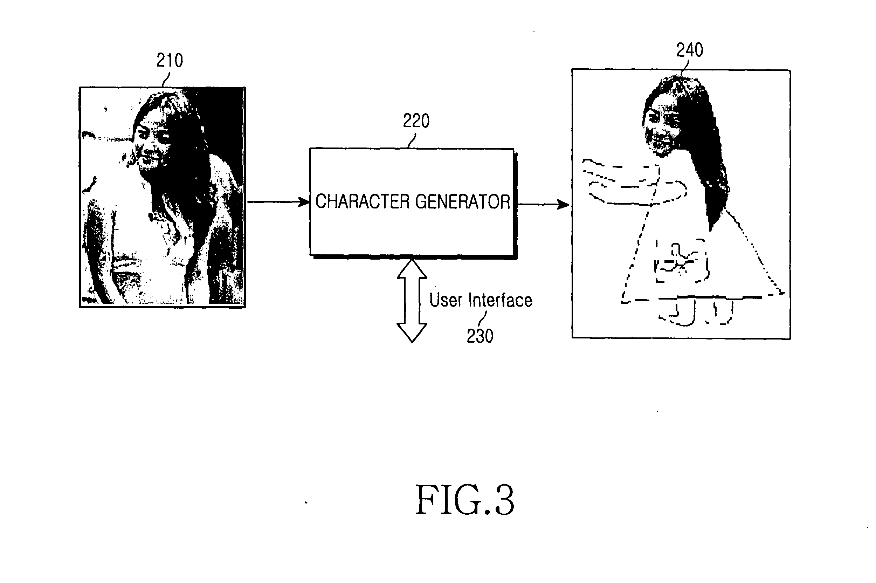

The operation of the character generator will be described below with reference to FIG. 3. FIG. 3 illustrates the character generator for use in the bring-up simulation game according to an embodiment of the present invention.

To generate a character to be brought up by simulation, a character generator 220 collects character generation data 210 such as a caricature, a cartoon, a picture or an animal.

The character generator 220 then generates a character 240 through a user interface 230 using the character generation data, reflecting an intention of the user.

If the character generator 220 is within the mobile terminal, the user sets the character directly using the mobile terminal. If the character generator 220 is in a mobile communication network, the user accesses the character generator 220 over the Internet for example, generates the character, and downloads the character from a PC to the mobile terminal, or directly downloads the character to the mobile terminal if the mobile terminal is connected to the mobile communication network.

The character generator 220 can generate an initial character by downloading a variety of creative designs from Internet web sites through the user interface 230. For example, clothes are purchased and put on the initial character 240, its hair style is changed, or it wears accessories, like an avatar.

Along with the widespread use of mobile phones having in-built cameras, a character can be set for a bring-up simulation using a picture taken by a camera phone as character generation data. How character generation data is collected will be addressed later with reference to FIGs. 4A, 4B and 4C, as examples.

The character generation data is collected by taking a picture using a camera phone, or downloading a picture from another terminal or a PC, as illustrated in FIGs. 4A, 4B and 4C. In another embodiment, the character generation data is pre-stored in the mobile terminal by a mobile terminal manufacturer.

FIG. 4A illustrates a user's character generation data collection using a camera phone according to an embodiment of the present invention. The mobile terminal user captures an intended object 110 using his camera phone 120 and inputs the picture to the character generator.

In the illustrated embodiment of FIG. 4B, a mobile terminal 140 downloads the picture of the intended object 110 captured by the camera phone 120 through a mobile communication network 130 and stores the picture in its character generator.

FIG. 4C illustrates a user's collection of character generation data from a database of an external network server 180. The user accesses the external network server 180, selects character generation data 182 such as a celebrity, a cartoon hero/heroine, a caricature of a particular person, a picture, or an animal, and stores the character generation data in a mobile terminal 170. Or the user selects an avatar 184 reflecting him and stores it in the mobile terminal 170. The character generation data 182 or avatar 184 can be accessed directly by mobile terminal 120 via a network connection 186 and 188, respectively. Network connections 186 and 188 may be connections to different networks or the same network

The user can decorate the character using clothes, accessories, and hair styles purchased through the server 180, or give clothes or other items as a gift to a character mapped to a desired person or group. It can be further contemplated that the user accesses the server 180 through the Internet 150 from a PC 160 having a character generation program, collects character generation data by the server 180, generates a character in the server 180, and then downloads the character to the mobile terminal 170.

Pictures collected in the manners illustrated in FIGs. 4A, 4B and 4C are used as character generation data for a character to be brought up or reared by simulation.

After the data collection is completed, the character generator 18 generates an initial character using the pictures. The bring-up simulator 17 then brings up the initial character by collecting various pieces of bring-up call information.

FIG. 5A illustrates character growing by a bring-up simulation in the mobile terminal according to an embodiment of the present invention.

Referring to FIG. 5A, an LCD screen 310 displays the appearance 340 of an initial character 320 in accordance with a growth stage in the bring-up simulation. The initial character 320 is shown as a kid in the first stage of the simulation. Depending on how often the user works on the character growing, the initial character 320 gradually advances or retrogresses in physical growth. The bring-up simulator 17 preliminarily defines growth stages for the initial character according to collected bring-up call information. A character growth model is downloaded from a mobile communication network or a predetermined model is used with some modifications made to it, according to user selections. A state graph 330 representing the feeling or health of the character 320 advances or retreats according to the bring-up calls information. The LCD screen 310 displays the appearance of the character 320 stored in accordance with the state. Growth arrows 330a and 330b indicate growth stages in terms of energy or affection required for growth. The appearance of the initial character 320 is changed to an appearance set in accordance with its growth stage and current state.

FIG. 5B illustrates an LCD screen set for the bring-up simulation in the mobile terminal according to another embodiment of the present invention. Referring to FIG. 5B, graphs are displayed which illustrate the amount of bring-up call information for a predetermined character for a predetermined time unit, or for a user-set time period. For example, the graphs are a call duration/week graph 360 indicating the weekly duration of calls with a phone number mapped to the character, a Short Message Service (SMS) per week graph 370 indicating the number of text messages transmitted and received to and from the telephone number, respectively, a multimedia per week graph 380 indicating the amount of music received as a present from the telephone number, and a gift per week graph 380 indicating the number of gifts for the character received from the phone number. Besides, a growth graph 345 indicating the growth stage of the character set according to the bring-up call information and the appearances of the character 350 at the current state are displayed. These display items 345 and 350 to 390 can be freely set by the user. The graphs 360, 370, 380 and 390 can be set to indicate target values set for each character and the current values. The growth graph 340 is set to indicate a value needed to leap to the next stage and the current growth stage. The character 350 is shown in correspondence with the current state.

The bring-up call information can be set in many ways. For example, the character is mapped to the phone number of a predetermined person and incoming and outgoing call information from and to, respectively, the person serves as a meter of the growth of the character in the embodiments of the present invention. The person can be a boyfriend, girlfriend, a family member, or a friend according to user selections. The call information is the number and duration of voice calls, the number of incoming and outgoing text messages, and gifts for decorating the character. The character advances or retrogresses as the call information about the person mapped to the character increases or decreases.

With reference to FIG. 6, a method of bringing up a character will be described in more detail. FIG. 6 is a block diagram of the bring-up simulator according to an embodiment of the present invention.

Referring to FIG. 6, the bring-up simulator is comprised of a call detector 430 for collecting call information and extracting bring-up call information, a call decider 450 for deciding effects on the growth of the character by analyzing information associated with the character in the call information, an active management information decider 480 for setting active management bring-up information for the character by analyzing the number of call information occurrences for a predetermined time period, a connection manager 490 for managing characters associated with calls by analyzing the call information, a character controller 460 for displaying the character in a growth stage reflecting the outputs of the call decider 450 and the active management information decider 480 and displaying a connection management menu through the connection manager 490, a manual management information decider 470 for sensing user input for growing the character, and an LCD 485 for displaying the character.

The call detector 430 monitors all outgoing 420 and incoming calls 410. Herein, a call can be an incoming and outgoing call or text message. The call detector 430 extracts bring-up call information 440 indicating the number and duration of incoming and outgoing calls at the phone number mapped to the character, the number of incoming and outgoing text messages at the phone number, and gifts for the character received from the phone number.

The call decider 450 generates numerical character bring-up information from the bring-up call information. According to how often the user has talked with the person mapped to the character and received gifts from the person, the growth stage and state of the character are changed and thus the appearances of the character are changed correspondingly. For example, five growth stages are preferably defined: stage 1 (babyhood), stage 2 (childhood), stage 4 (adolescence), stage 4 (manhood), and stage 5 (old age). Also, two types of character states are considered: emotional state and health state. The emotional state is classified into joy, sorrow, anger, and the like. The health state of the character is classified into categories such as pain, hunger, good condition, and the like.

The manual management information decider 470 senses a caring motion, such as feeding the character or putting the character to sleep, made by manipulating a menu in the mobile terminal by the user, and generates numerical manual management information to be reflected in character growing.

The active management information decider 480 counts the number of occurrences of the bring-up call information of the character and generates active management information based on the count. The active management information is used for the character to express its complaints and requests irrespective of what the user thinks about the character, beyond passively responding to the user's growing actions. Specifically, the active management information indicates the presence or absence of the bring-up information of the character for a predetermined time period. The user can set a different time period for each character, for example, 30 days.

In the presence of a voice call or a message from the person mapped to the character within 30 days, the active management information decider 480 measures the amount of bring-up call information accumulated for the 30 days and compares the measurement with a user-set threshold. If the measurement exceeds the threshold, the active management information decider 480 sets the active management information of the character to satisfactory. On the contrary, if the measurement is equal to or less than the threshold, the active management information decider 480 sets the active management information to unsatisfactory.

The threshold covers the number and duration of incoming and outgoing calls and the number of incoming and outgoing text messages with the phone number mapped to the character. It is preset by the user. The threshold preferably includes at least one of the number of calls, the duration of the calls, and the number of text messages. For example, the threshold can be set to indicate 5 incoming and outgoing calls, 10 text messages, and a total call duration of 5 minutes.

The connection manager 490 automatically manages personal connections with persons having phone numbers mapped to respective characters based on bring-up call information extracted by the call detector 430. Specifically, the connection manager 490 automatically sends messages to persons with which the user has not been in touch for a predetermined time period or deletes them from the phone book, with permission from the user. Also, the connection manager 490 displays call information about a predetermined person on the LCD 485 according to user selections, as illustrated in FIG. 5B.

The character controller 460 determines the growth stage of the character by reflecting the numerical information received from the call decider 450. The values of the numerical bring-up call information 440 are preset for every growth stage and the appearances of the character are also preset in accordance with every growth stage. Therefore, when the growth stage is determined, the character controller 460 displays the appearances of the character corresponding to the growth stage on the LCD 485. The character can be grown based on the manual management information as well as the bring-up call information.

The character controller 460 also presents an active representation of the character expressing satisfaction or dissatisfaction according to the active management information received from the active management information decider 480, and corresponding sound effects through the LCD 485. The character assumes a look, outputs a message indicating the current degree of affection, or expresses satisfaction or dissatisfaction by voice or effect sound. Specifically, if the active management information indicates satisfaction, the character smiles, speaks a congratulatory message on the increased affection, and outputs sounds of bright laughter or sound effects like fanfare. If the active management information indicates dissatisfaction, the character looks blue, and outputs a warning alarm indicating decreased affection or the mobile terminal can start emitting a whining sound.

The character controller 460 invokes a preset connection management menu according to the connection management information received from the connection manager 490. For example, the connection management menu is a list of items about outputting a warning message to the phone numbers mapped to the character, deleting the character, or taking no action.

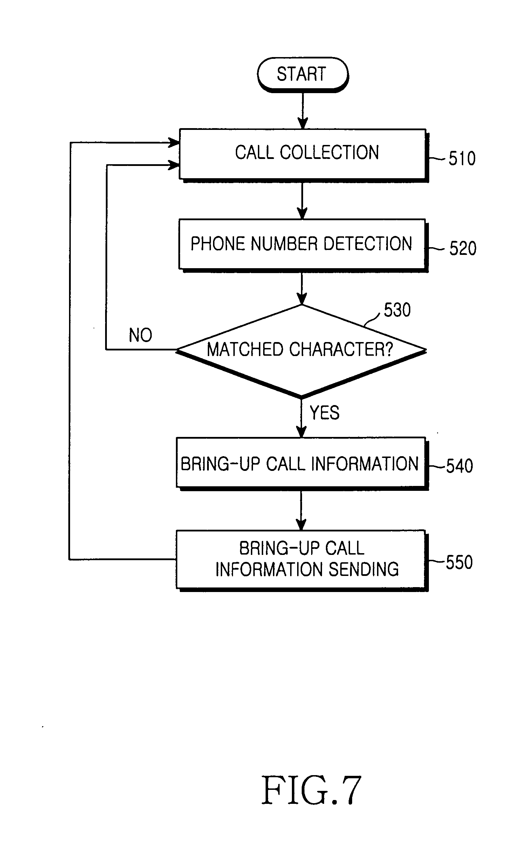

FIG. 7 is a flowchart illustrating the operation of the call detector according to an embodiment of the present invention.

Referring to FIG. 7, the call detector 510 awaits origination or termination of a call in the mobile terminal in step 510. The call means a text message as well as a voice call.

The call detector detects the phone number of the incoming and outgoing call in step 520 and determines whether the phone number is mapped to any character in step 530.

In the presence of a character mapped to the phone number, the call detector extracts bring-up call information about the phone number in step 540. The bring-up call information can include the number and duration of incoming/outgoing calls from/to, respectively, the phone number, the number of incoming/outgoing text messages from/to, respectively, the phone number, and gifts for decorating the character received from the phone number.

If no characters are mapped to the phone number in step 530, the call detector returns to step 510.

In step 550, the call detector transmits the bring-up call information to the call decider, the active management information decider, and the connection manager.

The call decider quantifies the bring-up call information numerically in order to update the growth stage of the character, and provides the quantified information to the character controller. The quantified bring-up call information represents the growth stage and feeling and health state of the character.

The character controller determines the growth stage and state of the character based on the numerical bring-up call information received from the call decider and manual management information received from the manual management information decider. Also, the character controller displays the active state of the character and manages the character based on active management information received from the active management information decider.

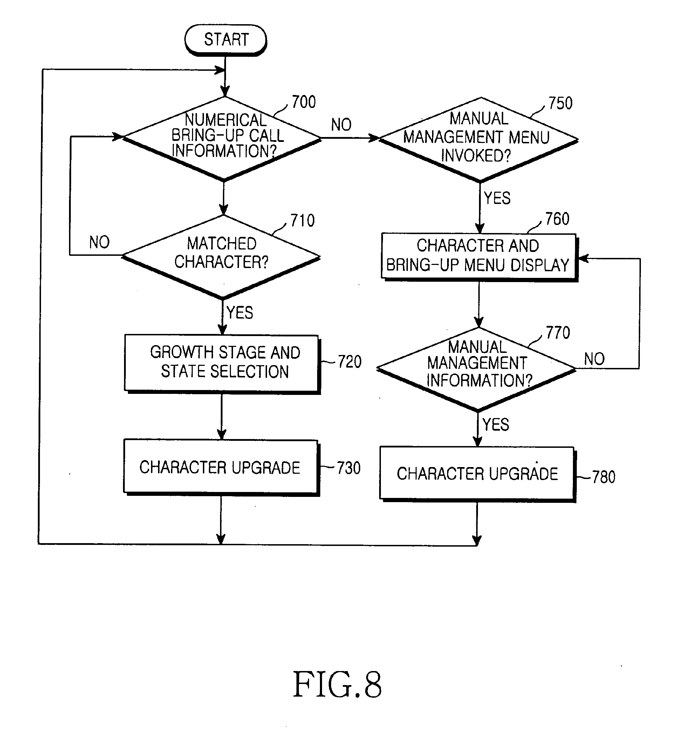

Now a description will be made of the operation of the character controller with reference to FIG. 8. FIG. 8 is a flowchart illustrating the operation of the character controller according to bring-up call information according to an embodiment of the present invention.

Referring to FIG. 8, the character controller determines whether numerical bring-up call information has been received in step 700. Upon receipt of the numerical bring-up call information from the call decider, the character controller determines whether the numerical bring-up call information comprises the bring-up call information of a phone number mapped to a character in step 710.

In the presence of the bring-up call information for the character, the character controller selects the appearances and state of the character in accordance with a growth stage corresponding to the bring-up call information (720). The character state indicates the degree of affection for the character, and the degree of feeling and health of the character.

In step 730, the character controller updates the appearances of the character in accordance with the growth stage. The character controller preferably indicates the growth stage of the character by a growth arrow, and the state of the character by a growth graph block and returns to step 700.

In the absence of the bring-up call information for the character in step 700, the character controller determines whether a manual management menu has been invoked in step 750.

Upon invocation of the manual management menu, the character controller displays the growth stage and state of the character and a bring-up menu on the LCD in step 760. For example, the bring-up menu has icons indicating character actions such as putting the character to sleep, feeding the character, and exercising the character.

In step 770, the character controller checks whether the manual management information has been received. The character controller updates the appearances and state of the character in correspondence with the manual management information, while preferably indicating the state of the character by a growth graph block and the growth stage of the character by a growth arrow in step 780.

In the absence of input information in step 770, the character controller returns to step 760.

In the absence of manual management information in step 750, the character controller returns to step 700.

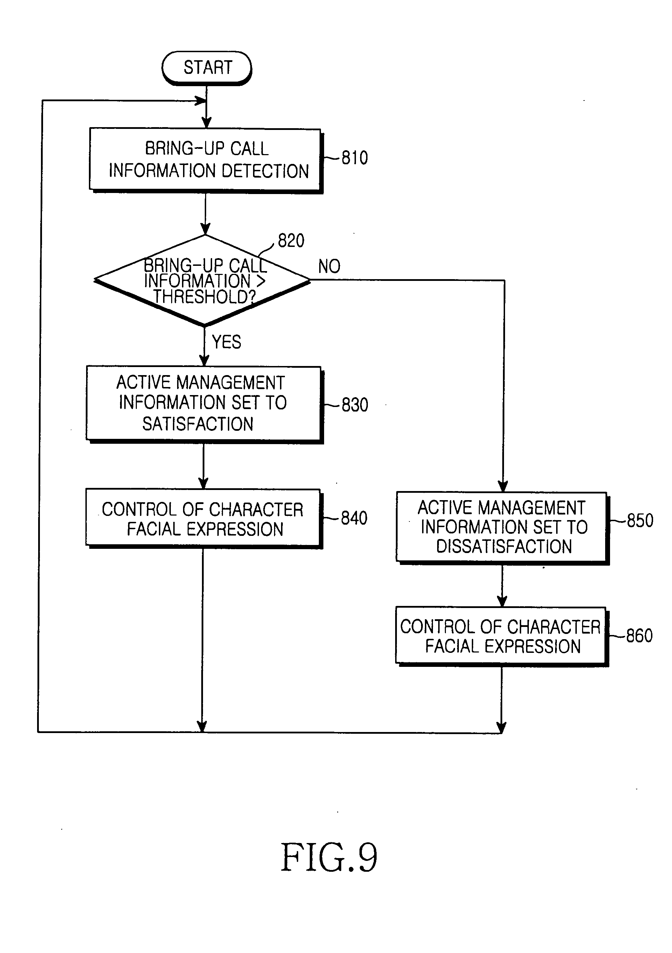

FIG. 9 is a flowchart illustrating an operation for simulating actions of a character based on active management information according to an embodiment of the present invention.

Referring to FIG. 9, the active management information decider detects the latest bring-up call information about a person or a group mapped to each character in step 810. The active management information decider compares the amount of the latest bring-up call information accumulated for the last 30 days with a predetermined threshold in step 820. The threshold is preferably at least one of a predetermined number of incoming and outgoing calls and messages and a predetermined duration of voice calls for the character.

If the amount exceeds the threshold, the active management information decider sets the active management information to satisfaction for the character and provides the active management information to the character controller in step 830. If the amount is equal to or less than the threshold, the active management information decider goes to step 850.

The character controller controls the character to look satisfied with bright laughter or while outputting a congratulation sound, thereby notifying the user of increased affection for the character in step 840.

On the other hand, in step 850, the active management information decider sets the active management information to dissatisfaction and provides the active management information to the character controller.

The character controller controls the character to preferably make a long face with whining and outputs a message warning of the lack of affection for the character in step 860.

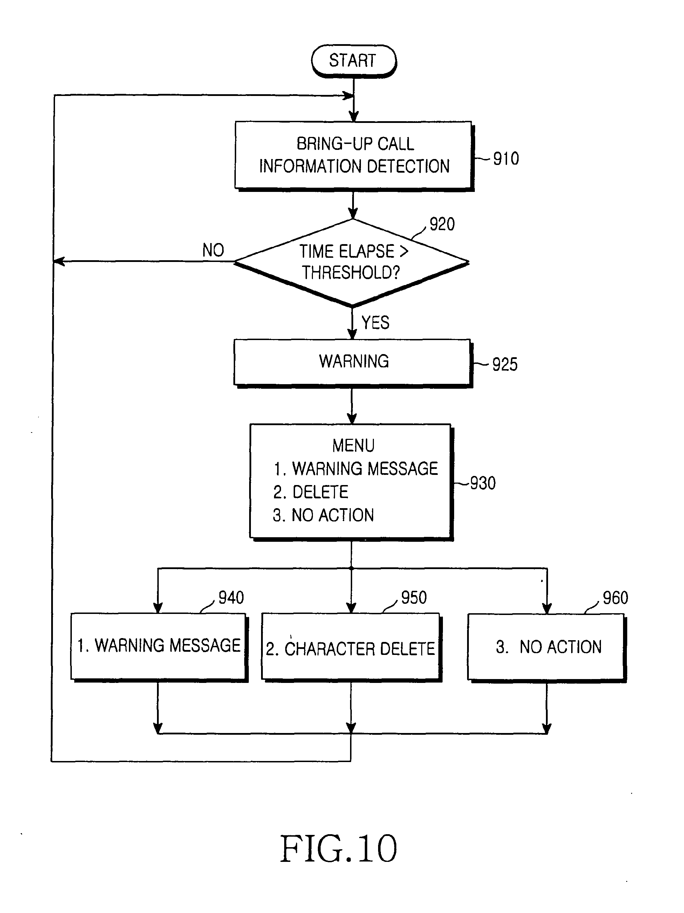

FIG. 10 is a flowchart illustrating an operation for managing personal connections with persons having phone numbers to which the character is mapped according to an embodiment of the present invention.

Referring to FIG. 10, the connection manager detects bring-up information about a phone number mapped to each character in step 910.

In step 920, the connection manager determines whether a predetermined number of days set for a connection management period have elapsed after the last day for calling or being called from the associated telephone number. For example, given 30 days as a threshold for connection management, the connection manager determines whether 30 days have elapsed since the last time of calling to or being called from the telephone number mapped to the character. If 30 days have not yet elapsed, the connection manager returns to step 910.

Upon expiration of 30 days, the connection manager outputs a warning message on the LCD in step 925. The warning message indicates that the threshold has elapsed since the last time of contact with the phone number mapped to the character.

In step 930, the connection manager transmits a signal for invoking a connection management menu on the LCD to the character controller.

The character controller displays a list of connection management menu items, for example, as item 1. automatic message, as item 2. delete character, as item 3. No action. When the user selects one of the menu items, the selected item is invoked.

If the user has selected item 1, the character controller sends to the mobile phone number mapped to the character a predetermined text message such as "Get in touch with me!" in step 940.

For item 2, in step 950, the character controller deletes the character in step 950.

For item 3, in step the character controller takes no action in step 960.

In accordance with the present invention as described above, a bring-up simulation game available from a mobile terminal can be used as a tool for measuring the degree of affection and closeness for a predetermined character. Transmission of a message requesting active management information required for actively bringing up the character can be utilized for management of personal connections. Also, the bring-up simulation is played as a game on the mobile terminal.

While the invention has been shown and described with reference to certain preferred embodiments thereof, it will be understood by those skilled in the art that various changes in form and details may be made therein without departing from the spirit and scope of the invention as defined by the appended claims.

## Claims

1. An apparatus for providing a bring-up simulation game in a mobile terminal that makes a call over a mobile communication network, comprising:
a call detector for monitoring an incoming or outgoing call and collecting bring-up call information from the monitored call;
a call decider for analyzing bring-up call information associated with a phone number mapped to a predetermined character among the collected bring-up call information, quantizing the analyzed bring-up call information, and determining a growth stage of the character according to the numerical bring-up call information;
a character controller for updating the appearance and state of the character according to the growth stage of the character; and
a display for displaying the updated appearance and state of the character.

2. The apparatus of claim 1, further comprising a character generator provided in the mobile terminal or in the mobile communication network, for generating an initial character using character generation data and sending the initial character to the character controller.

3. The apparatus of claim 2, wherein the character generator comprises a user interface for reflecting an intention of a user in generating the character generation data.

4. The apparatus of claim 2, wherein the character generator generates the initial character using a picture taken by a camera of the mobile terminal or received from an external system and maps the initial character to a phone number entered by the user.

5. The apparatus of claim 1, wherein the call detector collects an incoming or outgoing call, detects the phone number of the call, determines whether there is a character mapped to the phone number, and, in the presence of the character mapped to the phone number, extracts bring-up call information associated with the phone number, and sends the bring-up call information to the call decider.

6. The apparatus of claim 1, wherein the bring-up call information comprises information about the number and duration of incoming or outgoing calls from or to the phone number mapped to the character, the number of incoming or outgoing messages from or to the phone number, and a received product for decorating the character.

7. The apparatus of claim 1, further comprising a manual management information decider for, upon receipt of manual management information from the user, analyzing the manual management information, numerically quantizing the analyzed manual management information, and sending the numerical manual management information to the character controller.

8. The apparatus of claim 6, wherein the manual management information is caring motion information comprising information regarding feeding, putting to sleep, or exercising the character.

9. The apparatus of claim 1, wherein the state of the character represents the feeling of the character, the health state of the character, or the degree of affection for the character.

10. The apparatus of claim 1, further comprising an active management information decider for analyzing the bring-up call information for a user-set time period, setting active management information for the character based on the analysis, and sending the active management information to the character controller.

11. The apparatus of claim 10, wherein the active management information decider compares an amount of the bring-up call information of the character with a threshold set by the user, sets the active management information to satisfaction if the amount reaches the threshold, and sets the active management information to dissatisfaction if the amount does not reach the threshold.

12. The apparatus of claim 9, wherein according to the active management information, the character controller controls the facial expression of the character and outputs a warning sound about a current degree of affection and a sound effect indicating satisfaction or dissatisfaction with the current degree of affection.

13. The apparatus of claim 1, further comprising a personal connection manager for determining how long of a time has elapsed since the last contact at the phone number mapped to the character by analyzing the bring-up call information, and, if the time elapse is longer than a predetermined time period, invoking a connection management menu.

14. The apparatus of claim 13, wherein the connection management menu comprises menu items indicating a warning message, character deletion, and no action.

15. A method of providing a bring-up simulation game in a mobile terminal, comprising the steps of:
(1) generating an intended initial character to be brought up in the bring-up simulation game, and mapping the character to a phone number of a predetermined person;
(2) detecting bring-up call information associated with the phone number, upon input of the phone number; and
(3) updating the appearance and state of the character by analyzing the bring-up call information.

16. The method of claim 15, wherein step (1) comprises the steps of:
collecting character generation data;
generating the initial character using the character generation data and reflecting an intention of a user; and
mapping the character to the phone number of the predetermined person.

17. The method of claim 16, wherein the character generation data comprises a picture taken by a camera of the mobile terminal or received from an external system.

18. The method of claim 15, wherein step (2) comprises the steps of:
collecting an incoming or outgoing call in the mobile terminal;
detecting the phone number of the call and determining whether there is a character mapped to the phone number; and
extracting bring-up call information associated with the phone number, if there is a character mapped to the phone number.

19. The method of claim 15, wherein step (3) comprises the steps of:
selecting a growth stage for the character by analyzing the bring-up call information; and
updating the character to an appearance and state preset for the growth stage.

20. The method of claim 15, wherein the bring-up call information comprises information about the number and duration of incoming or outgoing calls from or to the phone number mapped to the character, the number of incoming or outgoing messages from or to the phone number, and a received product for decorating the character.

21. The method of claim 15, further comprising the steps of receiving manual management information from the user, analyzing the manual management information, numerically quantizing the analyzed manual management information, and updating the appearance and state of the character according to the numerical manual management information.

22. The method of claim 21, wherein the manual management information is caring motion information comprising information regarding feeding, putting to sleep, or exercising the character.

23. The method of claim 15, wherein the state of the character represents the feeling of the character, the health state of the character, or the degree of affection for the character.

24. The method of claim 15, further comprising the step of setting active management information for the character depending on whether the bring-up call information exists for a user-set time period.

25. The method of claim 24, wherein the active management information setting step comprises the step of setting the active management information to satisfaction if the amount of the bring-up call information of the character for the time period reaches a threshold set by the user and setting the active management information to dissatisfaction if the amount does not reach the threshold.

26. The method of claim 24, further comprising the step of controlling the facial expression of the character and outputting a warning sound and a sound effect indicating satisfaction or dissatisfaction with a current degree of affection according to the active management information.

27. The method of claim 15, further comprising the step of determining how long of a time has elapsed since the last contact at the phone number mapped to the character by analyzing the bring-up call information, and if the time elapse is longer than a predetermined time period, invoking a connection management menu.

28. The method of claim 27, wherein the connection management menu comprises menu items indicating a warning message, character deletion, and no action.

29. A method of managing personal connections through a mobile terminal in a mobile communication system, comprising the steps of:
setting phone numbers to be managed for personal connections;
calculating an elapsed time since the last contact at each of the phone numbers; and
comparing the elapsed time with a predetermined time period and if the elapsed time is longer than the predetermined time period, outputting a warning message indicating the elapsed time is longer than the predetermined time period and displaying a connection management menu.

30. The method of claim 29, wherein the connection management menu includes menu items indicating a warning message, character deletion, and no action.
